# EUROPÄISCHE PATENTSCHRIFT

(11) **EP 1 132 191 B1**
(45) Veröffentlichungstag und Bekanntmachung des Hinweises auf die Patenterteilung: **16.05.2007**
(21) Anmeldenummer: 01104349.4
(22) Anmeldetag: 23.02.2001
(51) Int. Cl.: B29C 47/42

(54) **Planetwalzenextruder**
Planetary gear extruder
Extrudeuse planétaire

(30) Priorität: 08.03.2000 DE 10010807
(43) Veröffentlichungstag der Anmeldung: 12.09.2001
(73) Patentinhaber: Battenfeld Extrusionstechnik GmbH, 32547 Bad Oeynhausen (DE)
(72) Erfinder: Brandt, Rolf, Dipl.-Ing., 32257 Bünde (DE); Dröge, Berthold, Dipl.-Ing., 32547 Bad Oeynhausen (DE); Scheding, Dieter, 32547 Bad Oeynhausen (DE)

(56) Entgegenhaltungen:
- EP-A- 0 635 343
- DE-A- 2 521 774
- DE-C- 4 231 232

## Beschreibung

Die Erfindung bezieht sich auf einen Planetwalzenextruder
- mit einem eine Innenverzahnung aufweisenden Walzenzylinder,
- mit einer eine Außenverzahnung aufweisenden Hauptspindel und
- mit mehreren zwischen Walzenzylinder und Hauptspindel angeordneten, eine Außenverzahnung aufweisenden Planetspindeln.

Planetwalzenextruder dienen der Herstellung von Kunststoffschmelze, vorzugsweise für die Aufbereitung von empfindlichen Formmassen. Dabei sind mehrere Planetspindeln zwischen einem Walzenzylinder und einer Hauptspindel angeordnet. Beim Antrieb der Hauptspindel wälzen die in Walzenzylinder, Planetspindeln und Hauptspindel eingearbeiteten Verzahnungen aufeinander ab, so daß das zu plastifizierende Kunststoffmaterial einer intensiven Knetwirkung unterworfen wird. Die so hergestellte Kunststoffschmelze hat eine hohe Güte.

Der Plastifizierprozeß in einem Planetwalzenextruder findet im Walzenteil statt. Durch Wärmeübertragung und Einleitung von mechanischer Energie wird das zu verarbeitende Material in einen plastischen Zustand überführt, es bildet sich dabei ein Knet.

Für den Transport der plastifizierten Kunststoffmassen überlagern sich in einem Planetwalzenextruder zwei Fördermechanismen. Einerseits wird das Material durch die Spalte der Verzahnung gepreßt, dadurch wird Energie zum Plastifizieren und Dispergieren eingebracht. Andererseits bildet sich vor den Spalten ein Knet, der durch die Steigung der Verzahnung in Längsrichtung fortbewegt wird. Versuche haben gezeigt, daß ab einer bestimmten Knetgröße unaufgeschmolzene Teilchen längs durch den Extruder gefördert werden, ohne daß jemals eine Überrollung durch einen Spalt stattfindet. Es besteht nun die Möglichkeit, den Extruder entsprechend soweit zu verlängern, bis eine ausreichende Plastifizierung und Homogenisierung stattfindet.

Nachteilig bei dieser Lösung ist, daß unnötig viel Energie im Knet dissipiert wird, die auf der zusätzlichen Länge des Extruders durch starke Kühlung wieder abgezogen werden muß. Aus dem jüngeren Stand der Technik sind verschiedene Weiterentwicklungen an Planetwalzenextrudem bekannt, die diese Entwicklungsrichtung verfeinern. Aus der **DE 25 21774** ist bekannt, einen Planetwalzenextruder mit einem Stauring zu versehen. Mit diesem Ansatz ist eine Verbesserung möglich, jedoch nicht immer befriedigend.

Der Erfindung liegt daher die **Aufgabe** zugrunde, einen Planetwalzenextruder derart weiterzubilden, daß eine unnötig lange Maschinenausführung entbehrlich ist und somit der erhöhte Energieverlust, insbesondere durch Kühlung, vermieden wird, bei gleichzeitig guter Plastifizierung und Dispergierung des Kunststoffmaterials.

Die **Lösung** der Aufgabe ist dadurch gekennzeichnet, daß der Achsabstand zwischen zumindest zwei benachbarten Planetspindeln kleiner als der Kopfkreisdurchmesser der Verzahnung der Planetspindeln ist, wobei die Planetspindeln mindestens mit einem Einstich bzw. einer Eindrehung versehen, der bzw. die sich über einen definierten Längenabschnitt der Planetspindel erstreckt. Hierdurch wird es ermöglicht, daß benachbarte Planetspindeln ineinander greifen können und somit der Zwischenraum zwischen den Planetspindeln verkleinert wird, so daß eine verbesserte Materialdurchmischung erreicht wird.

Vorteilhafter Weise sind im montierten Zustand des Planetwalzenextruders sind die Längenbereiche mit Einstichen bzw. Eindrehungen und die Längenbereiche ohne Einstiche bzw. Eindrehungen zueinander weitgehend komplementär ausgebildet. Vorteilhafterweise verbleiben zwischen zwei benachbarten Planetspindeln Spalte, die zwischen 0,2 und 5 mm, vorzugsweise 1 mm, betragen.

Diese segmentweise Aussparung der Planetspindeln ermöglicht ein Ineinanderlaufen der Planetspindeln, ohne daß sich diese dabei berühren. Der Vorteil dieser Ausgestaltung ist, daß alle Oberflächen aufeinander abkämmen. Benachbarte Planetspindeln kämmen mit dem Einstich, die Verzahnung der Planetspindel mit der Hauptspindel und dem Walzenzylinder.

Die Einstiche bzw. Eindrehungen der Planetspindeln weisen gerade Seitenflanken auf. Gemäß einer vorteilhaften Weiterbildung bilden die Seitenflanken mit der Längsachse der Planetspindel einen Winkel, der zwischen 70° und 150°, vorzugsweise 90°, beträgt.

Besonders vorteilhaft ist es, wenn der Achsabstand zwischen allen Planetspindeln gleich groß ist. Es ist aber auch denkbar, mehrere Gruppen von Planetspindeln zu bilden, die aus jeweils mindestens zwei Planetspindeln bestehen und um die Hauptspindel herum angeordnet sind.

Eine besondere Schwierigkeit stellt jedoch die geeignete Form der Einstiche dar. Planetengetriebe und die daran baulich angelehnten Planetwalzenextruder lassen die Plazierung der Planetspindeln nur an bestimmten Positionen zu. Die Anzahl der möglichen Positionen ergibt sich aus der Summe der Zähne des Walzenzylinders plus der Summe der Zähne der Hauptspindel. Der Abstand der Planetspindeln kann also nur dann konstant sein, wenn diese Summe sich durch die Anzahl der Planetspindeln teilen läßt. Da eine gleichmäßige Aufteilung der Planetspindeln für die Prozeßführung des Planetwalzenextruders wichtig ist, wird die Verzahnung so dimensioniert, daß mehrere Planetspindelbestückungen bei gleichen Abständen möglich sind.

Sollen die Planetspindeln nun mit konstanten Abständen ineinander kämmen, so ist es zunächst erforderlich, eine geradzahlige Bestückung zu finden, die gleiche Abstände der Planeten untereinander gewährleistet. Sodann sind die typischen Abstände der Planeten auf der Kreisbahn zu ermitteln, um die geeignete Geometrie der Einstiche zu finden. Die Form und Tiefe der Einstiche müssen für jede Extruderbaugröße und Planetenbestückung neu definiert werden.

Im montierten Zustand und während des Betriebes laufen die losen Spindeln gegen einen Anschlag, den sogenannten Anlaufring. In dieser Situation muß gewährleistet sein, daß benachbarte Planetspindeln sich nicht berühren und somit nicht beschädigt werden. Damit eine derartige Beschädigung der Planetspindeln verhindert wird, ist vorgesehen, die Einstiche bzw. Eindrehungen so zu plazieren, daß zwischen der Projektion zweier Spindeln immer ein gewisses Spiel vorhanden ist.

Weiterhin ist vorgesehen, daß die Planetspindeln unterschiedliche Längen aufweisen.

In den Zeichnungen ist eine schematische Darstellung der Erfindung gezeigt.
- Fig. 1: zeigt eine perspektivische Darstellung von Teilbereichen eines Planetwalzenextruders, in
- Fig. 2: ist ein Schnitt durch einen Planetwalzenextruder dargestellt, und
- Fig. 3: nebeneinander angeordnete Planetspindeln.

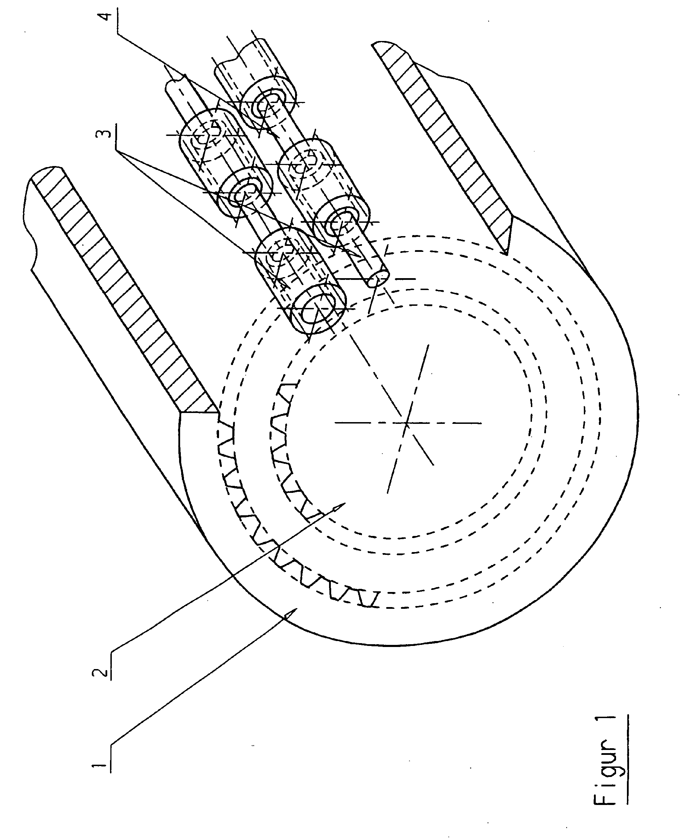

Figur 1 zeigt schematisch die Anordnung in einem Planetwalzenextruder mit einem eine Innenverzahnung aufweisendem Walzenzylinder 1 mit einem eine Außenverzahnung aufweisende Hauptspindel 2 und dazwischen angeordneten Planetspindeln 3. Die Verzahnung der Spindel ist jeweils nicht dargestellt, so daß hier zylindrische Oberflächen gezeigt sind, nicht zuletzt, um den Kopfkreisdurchmesser D zu verdeutlichen.

Die Planetspindeln zeigen Längenabschnitte mit Einstichen 4 und Längenabschnitte ohne Einstiche 5 auf. Die benachbarten Planetspindeln sind weitgehendst komplementär ausgeführt, so daß diese ineinander greifen können.

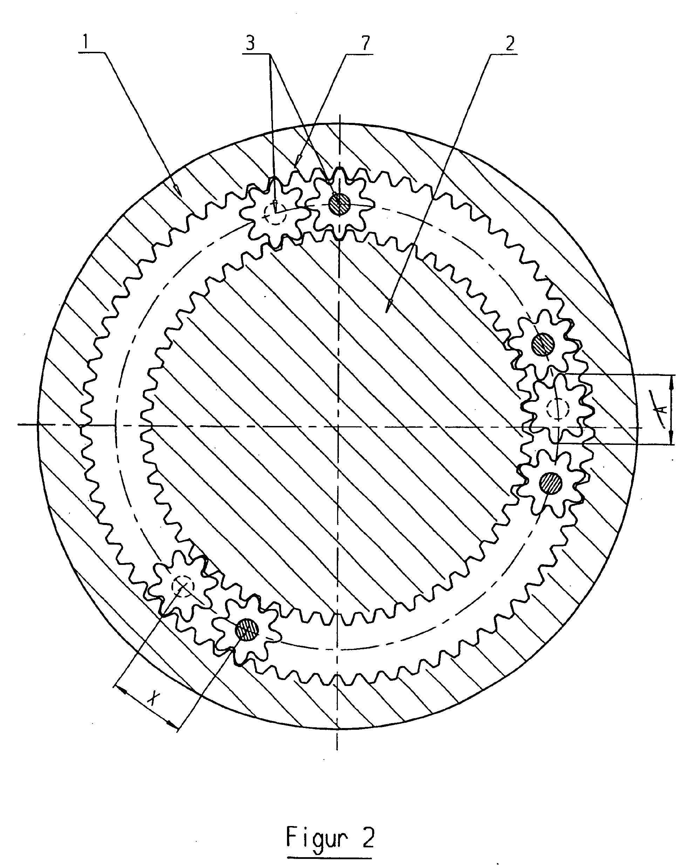

Die Schnittdarstellung in Figur 2 zeigt den Walzenzylinder 1, die Hauptspindel 2 sowie Planetspindeln 3. Die Planetspindeln 3 sind in Gruppen 7 angeordnet und hier beispielsweise wiederum in drei Gruppen um die Hauptspindel herum. Der Achsabstand X von benachbarten, hier ineinandergreifenden Planetspindeln 3, ist kleiner als der Kopfkreisdurchmesser D einer Planetspindel 3.

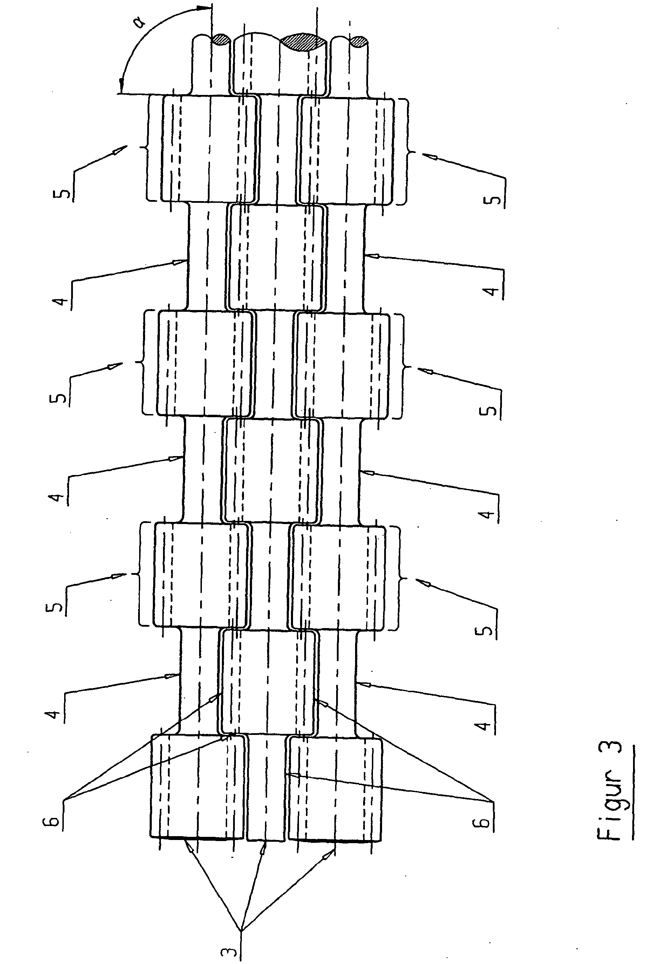

Die beispielhafte Anordnung von drei benachbarten Planetspindeln 3 ist in Figur 3 aufgezeigt. Die Längenabschnitte mit Einstichen 4 und Längenabschnitte ohne Einstiche 5 der benachbarten Planetspindeln 3 sind weitgehendst komplementär ausgeführt, und greifen ineinander ein. Es ist jedoch sichergestellt, daß immer ein Spalt 6 zwischen 0,2 und 5 mm, vorzugsweise 1 mm, zwischen den Spindeln verbleibt. Die Einstiche 4 weisen Seitenflanken auf, die hier in einem Winkel α von 90° zur Längsachse der Planetspindel 3 ausgeführt sind. Es ist jedoch auch ein Winkel α zwischen 70° und 150° denkbar.

Die gewählte Lösung verändert den bisher gekannten Verfahrensprozeß im Planetwalzenextruder. Statt einer längs offenen Kammer zwischen den Planetspindeln befindet sich ein Überlappungsbereich der Planetspindeln. Dieser teilt den zur Verfügung stehenden Raum in zwei kleinere axial offene Räume auf. Die sich darin ausbildenden Knete sind deutlich kleiner als die in den bekannten Ausführungen, daher ist die Gefahr, daß unaufgeschmolzenes Material in dem Raum zwischen den Spindeln zum Austritt gelangt, enorm reduziert.

Durch die segmentweisen wechselseitigen Aussparungen wird der Knet oft unterbrochen und in den sich innerhalb der Spindeln befindlichen Vorratsräumen neu formatiert. Feststoffteile werden dadurch gut aufgenommen und dispergiert.

Die erfindungsgemäße Umsetzung einer Versuchsmaschine bewies die Funktion dieser Lösung in unerwarteter Prägnanz. Mit der gewählten Geometrie kann bei bestimmten, schwer homogenisierbaren Materialien eine um die Hälfte verkürzte Maschine realisiert werden. Die mechanische Energiezufuhr ist bezogen auf die vergleichbare Länge mit konventioneller Planetspindelbestückung deutlich erhöht. Dadurch wird der Energieeintrag effizienter. Die Länge der Maschine kann auf das richtige Maß dimensioniert werden. Damit können Investitionkosten und Betriebskosten verringert werden.

### Bezugszeichenliste:

- 1: Walzenzylinder
- 2: Hauptspindel
- 3: Planetspindel
- 4: Einstich in Planetspindel 3
- 5: Bereich ohne Einstich 4 in Planetspindel 3
- 6: Spalt zwischen zwei benachbarten Planetspindeln 3
- 7: Gruppe von mindestens zwei Planetspindeln 3

- D: Kopfkreisdurchmesser einer Planetspindel 3
- X: Abstand zweier benachbarter Planetspindeln 3

- α: Winkel des Einstichs 4

## Patentansprüche

1. Planetwalzenextruder
- mit einem eine Innenverzahnung aufweisenden Walzenzylinder (1),
- mit einer eine Außenverzahnung aufweisenden Hauptspindel (2) und
- mit mehreren zwischen Walzenzylinder (1) und Hauptspindel (2) angeordneten, eine Außenverzahnung aufweisenden Planetspindeln (3),
**dadurch gekennzeichnet,**
**dass** der Achsabstand (X) zwischen zumindest zwei benachbarten Planetspindeln (3) kleiner als der Kopfkreisdurchmesser (D) der Verzahnung der Planetspindeln (3) ist,
wobei die Planetspindeln (3) mindestens einen Einstich bzw. eine Eindrehung (4) aufweisen, der bzw. die sich über einen definierten Längenabschnitt der Planetspindel (3) erstreckt.

2. Planetwalzenextruder nach Anspruch 1, **dadurch gekennzeichnet, dass** im montierten Zustand des Planetwalzenextruders die Längenbereiche mit Einstichen bzw. Eindrehungen (4) und die Längenbereiche ohne Einstiche bzw. Eindrehungen (4) zueinander weitgehend komplementär ausgebildet sind.

3. Planetwalzenextruder nach Anspruch 2, **dadurch gekennzeichnet, dass** die Einstiche bzw. Eindrehungen (4) so ausgebildet sind, dass im montierten Zustand des Planetwalzenextruders im Bereich der Einstiche bzw. Eindrehungen (4) Spalte (6) zwischen zwei benachbarten Planetspindeln (3) verbleiben, die zwischen 0,2 und 5 mm, vorzugsweise 1 mm, betragen.

4. Planetwalzenextruder nach einem der Ansprüche 2 oder 3, **dadurch gekennzeichnet, dass** die Einstiche bzw. Eindrehungen (4) gerade Seitenflanken aufweisen.

5. Planetwalzenextruder nach Anspruch 4, **dadurch gekennzeichnet, dass** die Seitenflanken mit der Längsachse der Planetspindel (3) einen Winkel (α) bilden, der zwischen 70° und 150°, vorzugsweise 90°, beträgt.

6. Planetwalzenextruder nach einem der Ansprüche 1 bis 5, **dadurch gekennzeichnet, dass** der Achsabstand (X) zwischen allen Planetspindeln (3) gleich groß ist.

7. Planetwalzenextruder nach einem der Ansprüche 1 bis 5, **dadurch gekennzeichnet, dass** mehrere Gruppen (7) Planetspindeln (3), bestehend jeweils aus mindestens zwei Planetspindeln (3), um die Hauptspindel (2) herum angeordnet sind.

8. Planetwalzenextruder nach einem der Ansprüche 1 bis 7, **dadurch gekennzeichnet, dass** die Planetspindeln (3) unterschiedliche Längen aufweisen.

## Claims

1. Planetary gear extruder
- with a roller cylinder (1) having inner toothing,
- with a main spindle (2) having outer toothing and
- with several planetary gear spindles (3) having outer toothing and arranged between roller cylinder (1) and main spindle (2),
**characterised in that** the axial distance (X) between at least two adjacent planetary gear spindles (3) is less than the crown circle diameter (D) of the toothing of the planetary gear spindles (3), wherein the planetary gear spindles (3) have at least one recess or an indentation (4), which extends over a defined longitudinal section of the planetary gear spindle (3).

2. Planetary gear extruder according to claim 1, **characterised in that** in the assembled state of the planetary gear extruder, the longitudinal regions with recesses or indentations (4) and the longitudinal regions without recesses or indentations (4) are designed to be largely complementary to one another.

3. Planetary gear extruder according to claim 2, **characterised in that** the recesses or indentations (4) are designed so that in the assembled state of the planetary gear extruder, in the region of the recesses or indentations (4), gaps (6) between two adjacent planetary gear spindles (3) remain, which are between 0.2 and 5 mm, preferably 1 mm.

4. Planetary gear extruder according to one of claims 2 or 3, **characterised in that** the recesses or indentations (4) have straight side flanks.

5. Planetary gear extruder according to claim 4, **characterised in that** the side flanks form an angle (α), which is between 70° and 150°, preferably 90°, with the longitudinal axis of the planetary gear spindle (3).

6. Planetary gear extruder according to one of claims 1 to 5, **characterised in that** the axial distance (X) between all planetary gear spindles (3) is the same size.

7. Planetary gear extruder according to one of claims 1 to 5, **characterised in that** several groups (7) of planetary gear spindles (3), consisting in each case of at least two planetary gear spindles (3), are arranged around the main spindle (2).

8. Planetary gear extruder according to one of claims 1 to 7, **characterised in that** the planetary gear spindles (3) have different lengths.

## Revendications

1. Extrudeuse planétaire, comprenant
- un cylindre de laminage (1) présentant une denture intérieure,
- une broche principale (2) présentant une denture extérieure et
- une pluralité de broches planétaires (3) présentant une denture extérieure et disposées entre le cylindre de laminage (1) et la broche principale (2),
**caractérisée par le fait que**
la distance axiale (X) entre au moins deux broches planétaires (3) voisines est inférieure au diamètre du cercle de tête (D) de la denture des broches planétaires (3),
les broches planétaires (3) présentant au moins une encoche ou une gorge (4), s'étendant sur une section longitudinale définie des broches planétaires (3).

2. Extrudeuse planétaire selon la revendication 1, **caractérisée par le fait que** lorsque l'extrudeuse planétaire est à l'état monté, les zones longitudinales munies d'encoches ou de gorges (4) et les zones longitudinales sans encoches ou gorges (4) sont complémentaires les unes des autres.

3. Extrudeuse planétaire selon la revendication 2, **caractérisée par le fait que** les encoches ou les gorges (4) sont réalisées de manière que lorsque l'extrudeuse planétaire est à l'état monté, il subsiste des espaces (6), d'une valeur comprise entre 0,2 et 5 mm, de préférence de 1 mm, dans la zone des encoches ou des gorges (4), entre deux broches planétaires (3) voisines.

4. Extrudeuse planétaire selon l'une des revendications 2 ou 3, **caractérisée par le fait que** les encoches ou les gorges (4) présentent des flancs latéraux rectilignes.

5. Extrudeuse planétaire selon la revendication 4, **caractérisée par le fait que** les flancs latéraux forment avec l'axe longitudinal de la broche planétaire (3) un angle (α) d'une valeur comprise entre 70° et 150°, de préférence de 90°.

6. Extrudeuse planétaire selon l'une des revendications 1 à 5, **caractérisée par le fait que** la distance axiale (X) entre toutes les broches planétaires (3) est la même.

7. Extrudeuse planétaire selon l'une des revendications 1 à 5, **caractérisée par le fait qu**'une pluralité de groupes (7) de broches planétaires (3), composés chacun d'au moins deux broches planétaires (3), sont disposées autour de la broche principale (2).

8. Extrudeuse planétaire selon l'une des revendications 1 à 7, **caractérisée par le fait que** les broches planétaires (3) présentent des longueurs différentes.
